# EUROPÄISCHE PATENTSCHRIFT

(11) **EP 3 710 281 B1**
(45) Veröffentlichungstag und Bekanntmachung des Hinweises auf die Patenterteilung: **26.07.2023**
(21) Anmeldenummer: 18804511.6
(22) Anmeldetag: 12.11.2018
(51) Int. Cl.: B60B 27/00

(54) **FAHRZEUGRADANORDNUNG UND VERFAHREN ZUR HERSTELLUNG EINER FAHRZEUGRADANORDNUNG**
VEHICLE WHEEL AND METHOD OF MANUFACTURING OF A WHEEL ARRANGEMENT
ROUE DE VÉHICULE ET MÉTHODE DE FABRICATION D'UN MONTAGE DE ROUE

(30) Priorität: 13.11.2017 DE 102017126636
(43) Veröffentlichungstag der Anmeldung: 23.09.2020
(73) Patentinhaber: Action Composites GmbH, 4910 Ried im Innkreis (AT)
(72) Erfinder: WERNER, Jens, 01640 Coswig (DE); DRESSLER, Michael, 01159 Dresden (DE); FRANKE, Florian, 01127 Dresden (DE); KÖHLER, Christian, 01099 Dresden (DE); FRANKE, Michael, 01239 Dresden (DE); MÄKE, Sandro, 01796 Dohma (DE); BARTSCH, André, 01159 Dresden (DE)
(74) Vertreter: Kailuweit & Uhlemann Patentanwälte Partnerschaft mbB
(86) Internationale Anmeldenummer: PCT/DE2018/100917
(87) Internationale Veröffentlichungsnummer: WO 2019/091518

(56) Entgegenhaltungen:
- EP-A1- 2 848 426
- EP-A1- 2 894 048
- EP-A1- 3 179 129
- EP-A2- 0 174 190
- EP-A2- 3 181 937
- FR-A3- 2 466 353

## Beschreibung

Die Erfindung betrifft eine Fahrzeugradanordnung, welche ein Rad mit einer Radnabe und mindestens ein Trägerelement zur Lagerung des Rades an einem Fahrzeugteil und/oder zur Anordnung einer Kraftübertragungseinheit aufweist, wobei die Radnabe mindestens einen Fügeabschnitt aufweist, der im Fügezustand der Fahrzeugradanordnung mit einem Fügeabschnitt des Trägerelements korrespondiert.

Derartige Fahrzeugradanordnungen sind bei Kraftfahrzeugen, insbesondere bei Zweirad-Kraftfahrzeugen bekannt.

Mittels ein- oder beidseitig der Radnabe angeordneten Trägerelemente wird das Rad beispielsweise auf einer Radachse oder einer Antriebswelle eines Fahrzeugs gelagert. Das Trägerelement kann des Weiteren der Anordnung einer Kraftübertragungseinheit des Fahrzeuges, wie z. B einer Antriebseinheit mit Kettenrad, einer Bremseinheit mit Bremsscheibe oder dergleichen dienen, wobei das Trägerelement die von der Kraftübertragungseinheit übertragenen Kräfte auf das Rad überträgt, insbesondere in die Radnabe des Rades einleitet.

Aus der Druckschrift EP 0174190 A2 ist eine Motorradanordnung bekannt, welche ein Rad aus Metall mit einem Nabenabschnitt, Speichen und einem Felgenabschnitt und mindestens einen Träger aus Metall für den Sitz der Radachse, einer Bremsscheibe, eines Kettenrades oder dergleichen aufweist.

Der Träger ist mittels einer Vielzahl von um die Achse der Radanordnung angeordneten Treibstiften, die beiden Endes in Sacklöcher am äußern Umfang des Trägers und um den Umfang des Nabenabschnittes eingetrieben sind, mit dem Rad verbunden.

Über den Form- und Kraftschluss der Treibstifte im Träger und im Nabenabschnitt erfolgt die Übertragung der Drehmomente aus der Rotationsbewegung des Rades.

Der Träger weist einen, kurzen ringförmigen Vorsprung mit einem Fügeabschnitt auf, der in einen Fügeabschnitt der zentralen Nabenöffnung des Nabenabschnitts eingefügt ist. Diese passgenaue Fügung dient der Fixierung des Trägers in radialer Richtung relativ zum Nabenabschnitt des Rades.

Der Träger wird beidseitig des Nabenabschnitts mittels eines durchführenden Lagerabstandshalters und eingeschraubten Endkappen in axialer Richtung der Radachse fixiert. Für den Radachsensitz weist der Träger am inneren Abschnitt einen Flansch für die Aufnahme eines Kugellagers auf.

Die Verbindung zwischen Nabenabschnitt und Träger ist zum einen sehr aufwendig und kostenintensiv herzustellen, da eine Vielzahl von Verbindungsteilen, Bohrlöchern und Halteteile gefertigt werden müssen. Zudem müssen die Bohrungen in Radnabe und Träger mit hoher Genauigkeit ausgeführt sein, um den Sitz der Passstiftverbindungen zu gewährleisten.

Zum anderen können die Passstiftverbindungen nur ein begrenztes Maß an Drehmoment übertragen, wobei der beschränkt zur Verfügung stehende Bauraum im Nabenbereich es verhindert, grö-ßere oder eine höhere Anzahl an Passstiften zu verwenden, ohne das Material des Nabenabschnittes zu stark zu belasten.

Aus der EP3179129A1 ist ein Verbindungselement zur Verbindung mit einer Bremsscheibenkonstruktion und einer Radlagereinheit bekannt.

Aus der EP2848426A1 ist eine Radnabe, insbesondere eine Flugzeugradnabe bekannt.

Aus der FR2466353A3 ist eine Nabe für ein Kleinkinder-Fahrrad bekannt. Die Verbindung zwischen Nabenabschnitt und Träger nach dem Stand der Technik ist insbesondere nicht geeignet für Radnaben bzw. Räder aus Faserverbundmaterial, da die Verbindung keine ausreichende Festigkeit im Bereich der Bohrlöcher im Faserverbundmaterial der Radnabe liefern würde und zudem ein erhöhtes Risiko der Entstehung von Schadstellen am Umfang des Nabenabschnittes aus Faserverbundmaterial hervorrufen würde. Insbesondere käme es durch die Bohrlöcher zu unerwünschten Faserdurchtrennungen, die eine erhebliche Schwächung des Faserver-bundwerkstoffes in diesem mechanisch hochbelasteten Bereich zur Folge hätte.

Der Erfindung liegt die Aufgabe zugrunde, eine Fahrzeugradanordnung und ein Verfahren zu dessen Herstellung bereitzustellen, welche die Nachteile des Standes der Technik beseitigt und welche insbesondere für die Anwendung bei Radnaben bzw. Rädern aus Faserverbundmaterial geeignet ist.

Zur Lösung dieser Aufgabe ist erfindungsgemäß eine Fahrzeugradanordnung nach Anspruch 1 vorgesehen, wobei die Oberflächenprofile der Fügeabschnitte derart ausgebildet sind, dass im Fügezustand der Fahrzeugradanordnung die Radnabe und das Trägerelement zumindest in Umfangsrichtung um die Radnabenachse miteinander formschlüssig verbunden sind.

Wird ein Trägerelement mit der Radnabe verbunden, kontaktieren die jeweiligen Oberflächenprofile des Fügeabschnitts der Radnabe und des Fügeabschnitts des Trägerelements einander, dementsprechend sind die Oberflächenprofile der Fügeabschnitte nach der Definition der Erfindung diejenigen, die im Fügezustand der Fahrzeugradanordnung einander zugewandt ausgebildet sind.

Der in Umfangsrichtung um die Radnabenachse ausgebildete Formschluss zwischen der Radnabe und dem Trägerelement kann durch ein in Umfangsrichtung um die Radnabenachse veränderlich ausgebildetes Oberflächenprofil der Fügeabschnitte der Radnabe und des Trägerelements derart erzeugt werden, dass z.B. entlang eines umlaufenden Flächenprofils der Radnabe und des Trägerelements und/oder entlang des Umfanges eines umlaufenden Querschnittsprofils der Radnabe und des Trägerelements eine oder mehrere variable Ausformungen bzw. Vertiefungen mit sich ergebenden Hinterschneidungen bestehen, die eine stabile Verdrehsicherung des Trägerelements gegenüber der Radnabe in Umfangsrichtung um die Radnabenachse und damit eine zuverlässige Übertragung der Drehmomente und Rotationskräfte während des Fahrzeugbetriebes von der Kraftübertragungseinheit über das Trägerelement auf das Rad gewährleisten.

Der ein umlaufendes Flächenprofil aufweisende Fügeabschnitt der Radnabe kann beispielsweise konzentrisch um eine üblicherweise vorhandene zentrale Nabenöffnung der Radnabe angeordnet sein und der ein umlaufendes Querschnittsprofils der Radnabe aufweisende Fügeabschnitt kann beispielsweise in der zentralen Nabenöffnung der Radnabe oder konzentrisch um die Nabenöffnung angeordnet sein.

Mittels der über den Umfang veränderlich ausgebildeten Oberflächenprofile der Fügeabschnitte der Radnabe und des Trägerelements kann eine großflächig ausgebildete Tangential-Formschlussverbindung in Umfangsrichtung mit vergleichsweise geringerer Flächenbelastung im Kontaktbereich der zu verbindenden Bauteile (Radnabe, Trägerelement) erzielt werden, so dass mit dieser Ausführung gegenüber der Ausführung nach dem Stand der Technik höhere Drehmomente bei geringerer punktueller Materialbelastung übertragen werden können.

Die Vielzahl von Verbindungsteilen und Bohrlöcher der Verbindung nach dem Stand der Technik können hierdurch entfallen, was die erfindungsgemäße Verbindung zudem kostengünstiger macht.

Vorteilhafte Ausgestaltungen und Weiterbildungen der Erfindung gehen aus den abhängigen Patentansprüchen, der nachfolgenden Beschreibung und den zugehörigen Zeichnungen hervor.

Die Ausführung der Verbindung ist wegen der günstigen Verteilung der Flächenlast und der damit verbundenen punktuell geringeren mechanischen und dynamischen Belastung insbesondere geeignet für die Anbindung des Trägerelements an Radnaben bzw. Räder, die eine Tragstruktur aus Faserverbundmaterial aufweisen.

Mit dem erfindungsgemäßen Formschluss ist in vorteilhafter Weise bei gleichzeitig höherer Kraftübertragung ein mechanischer Schutz der Tragstruktur der Radnabe aus Faserverbundmaterial verbunden, da mittels der Tangential-Formschlussverbindung konzentriert auftretende Relativbewegungen des Trägerelements gegenüber der Radnabe weitestgehend vermieden sind und damit ein deutlich geringerer Reibverschleiß des Faserverbundmaterials der Radnabe zu beobachten ist.

Nach einer vorteilhaften Ausgestaltung der Erfindung ist der mindestens eine Fügeabschnitt der Radnabe in einer zentralen Nabenöffnung der Radnabe ausgebildet. Hierbei können beispielsweise die innenseitig vorhandenen Flächen der zentralen Nabenöffnung genutzt werden. In der zentralen Nabenöffnung kann ein durchgängiger Fügeabschnitt entlang des gesamten Durchgangsquerschnitts der Nabenöffnung einer Vollprofil-Radnabe oder ein oder zwei einzelne Fügeabschnitte an den sich gegenüberliegenden Endabschnitten der unterbrochenen Nabenöffnung einer Hohlprofil-Radnabe ausgebildet sein.

Der Fügeabschnitt des Trägerelements kann korrespondierend zu dieser Ausführung auf dem Umfang eines in die Nabenöffnung einfügbaren Stutzens ausgebildet sein.

Neben einer technisch günstigen Ausführbarkeit dieser Gestaltung können die sich bietenden innenseitigen Flächen der Nabenöffnung zur Ausbildung des großflächigen Oberflächenprofils des /der Fügeabschnitts(e) genutzt werden und damit eine große Kraftübertragungsfläche für die Verbindung zwischen Trägerelement und Rad bereitstellen.

Nach einer vorteilhaften Ausgestaltung der Erfindung ist der mindestens eine Fügeabschnitt der Radnabe an einem in Richtung einer Radnabenachse erstreckten Bundflansch der Radnabe ausgebildet.

Der Bundflansch der Radnabe umgibt die zentrale Nabenöffnung und verlängert diese in Richtung der Radnabenachse.

Der Fügeabschnitt des Trägerelements kann korrespondierend zur Anordnung des Fügeabschnitts am axial erstreckten Bundflansch an einem in den Bundflansch und damit in die Nabenöffnung einfügbaren Stutzen oder an einem den Bundflansch umschließenden Stutzen des Trägerelements ausgebildet sein, wobei die Fügeabschnitte jeweils alternativ oder kumulativ, radial innenseitig und/oder radial außenseitig und/oder frontseitig des axial erstreckten Bundflansches der Radnabe bzw. des Stutzens des Trägerelements ausgebildet werden können.

Beispielsweise kann das Oberflächenprofil des Fügeabschnitts der Radnabe radial außenseitig auf dem axial erstreckten Bundflansch der Radnabe und das korrespondierende Oberflächenprofil des Fügeabschnitts des Trägerelements radial innenseitig in einem Hohlprofil des Stutzens des Trägerelements ausgebildet sein.

Diese Ausführungen ermöglichen einerseits eine noch größere Oberfläche zur Ausbildung des Oberflächenprofils der Fügeabschnitte zu nutzen und damit eine noch größere Kraftübertragungsfläche bereitzustellen und andererseits variable Anordnungsvarianten der Verbindung zwischen der Radnabe und verschiedenen Trägerelementen zu schaffen.

Nicht zuletzt sind die Fügeabschnitte an einem axial erstreckten Bundflansch der Radnabe leichter herzustellen.

Nach einer weiteren vorteilhaften Ausgestaltung sind die umlaufenden Oberflächenprofile der Fügeabschnitte der Radnabe und des Trägerelements in Umfangsrichtung der Radnabenachse zumindest abschnittsweise stufenförmig oder zahnförmig ausgebildet.

Die Oberflächenprofile der Fügeabschnitte der Radnabe und des Trägerelements weisen in Umfangsrichtung der Radnabenachse jeweils mindestens eine stufenförmige oder zahnförmige Ausformung in der Oberfläche des Fügeabschnitts der Radnabe oder des Trägerelements und eine dazu korrespondierende stufenförmige oder zahnförmige Ausnehmung /Senke in der Oberfläche des Fügeabschnitts des Trägerelements bzw. der Radnabe, die ineinandergreifen.

Diese einfache Profilgestaltung der Oberfläche der Fügeabschnitte erzeugt unter geringen Aufwendungen zur Herstellung der Verbindung und bei geringen Fertigungskosten zur Fertigung der Verbindungsteile einen ausreichend sicheren und damit zuverlässigen Tangential-Formschluss zwischen der Radnabe bzw. dem Rad und dem Trägerelement.

Sind in Umfangsrichtung der Radnabenachse ein Vielfaches der Kombinationen aus stufenförmiger oder zahnförmiger Ausformungen und stufenförmiger oder zahnförmiger Ausnehmungen / Senken in den Fügeabschnitten angeordnet, werden hierdurch eine günstige Verteilung der Kraftübertragung und eine Verbesserung der Drehmomenten-Übertragung erreicht.

Vorzugsweise setzt sich die stufige bzw. zahnförmige Gestaltung des Oberflächenprofils der Fügeabschnitte alternierend über dessen gesamten Umfang um die Radnabenachse fort.

Nach einer alternativen Ausgestaltung sind die Oberflächenprofile der Fügeabschnitte der Radnabe und des Trägerelements jeweils in Umfangsrichtung der Radnabenachse zumindest abschnittsweise wellenförmig ausgebildet.

Die Oberflächenprofile der Fügeabschnitte der Radnabe und des Trägerelements weisen in Umfangsrichtung der Radnabenachse hier jeweils mindestens einen Wellendorn in der Oberfläche des Fügeabschnitts der Radnabe oder des Trägerelements und eine dazu korrespondierende Wellensenke in der Oberfläche des Fügeabschnitts des Trägerelements bzw. der Radnabe auf, die ineinandergreifen.

Auch diese einfache Profilgestaltung der Oberfläche der Fügeabschnitte erzeugt unter geringen Aufwendungen zur Herstellung der Verbindung und bei geringen Fertigungskosten zur Fertigung der Verbindungsteile einen ausreichend sicheren und damit zuverlässigen Tangential-Formschluss zwischen der Radnabe bzw. dem Rad und dem Trägerelement.

Insbesondere erzeugt das Wellenprofil einen besonders stetigen Querschnittsübergang entlang der Oberflächenprofile der Fügeabschnitte, welcher eine homogene, spannungsarme Kraftübertragung vom Trägerelement auf die Radnabe ermöglicht und wodurch Kerbspannungen im Faserverbundwerkstoff deutlich gemindert werden.

Sind in Umfangsrichtung der Radnabenachse ein Vielfaches der Kombinationen aus Wellendorn und Wellensenke um den Umfang der Fügeabschnitte angeordnet, werden auch hierdurch eine günstige Verteilung der Kraftübertragung und eine Verbesserung der Drehmomenten-Übertragung erzielt.

Vorzugsweise setzt sich die wellenförmige Gestaltung des Oberflächenprofils der Fügeabschnitte alternierend über dessen gesamten Umfang um die Radnabenachse fort.

Eine konstruktiv günstige und sehr wirksame Ausgestaltung sieht vor, dass die Oberflächenprofile des Fügeabschnittes der Radnabe und des Trägerelements derart aufeinander abgestimmt ausgebildet sind, dass die Radnabe und das Trägerelement zumindest teilweise mit einer Presspassung miteinander verbunden sind.

Die in den korrespondierenden Fügeabschnitten der Radnabe und des Trägerelements ausgebildeten Oberflächenprofile sind beispielsweise zueinander mit einem solchen Übermaß versehen, dass in dem Verbindungsbereich des Trägerelements mit der Radnabe eine Presspassung erzeugt wird, welche eine Vorspannung in der Radnabe und /oder in dem Trägerelement und damit einen zum Formschluss zusätzlichen Kraftschluss bewirkt.

Die zusätzliche kraftschlüssige Verbindung zwischen dem Fügeabschnitt der Radnabe und dem Fügeabschnitt des Trägerelements sorgt für eine noch bessere Sicherung der Verbindung, insbesondere auch in axialer und radialer Richtung bezogen auf die Radnabenachse.

Zusätzliche Halteteile (wie Lagerabstandshalter und Endkappen nach dem Stand der Technik) zur Fixierung und Sicherung des Trägerelements in Richtung der Radachse werden somit überflüssig.

Im Weiteren können mit der Kombination aus Form- und Kraftschluss noch höhere Kräfte und Momente von der Kraftübertragungseinheit über das Trägerelement auf das Rad übertragen werden.

Nach einer weiteren vorteilhaften Ausgestaltung ist vorgesehen, dass das Oberflächenprofil des Fügeabschnitts der Radnabe und/oder das Oberflächenprofil des Fügeabschnitts des Trägerelements in Richtung der Radnabenachse veränderlich ausgebildet ist /sind.

Das veränderliche Oberflächenprofil kann beispielsweise in axialer Richtung der Radnabenachse unstetig oder stetig erweiternd bzw. unstetig oder stetig verjüngend ausgebildet sein.

Diese Ausführung fixiert die Verbindung zwischen Radnabe und Trägerelement zusätzlich in axialer Richtung und kann zudem eine Vorspannung in der Radnabe und /oder in dem Trägerelement für einen zusätzlichen Kraftschluss bewirken, was damit zu einer Erhöhung der Sicherheit und Zuverlässigkeit der Verbindung führt.

Ist das jeweilige Oberflächenprofil des Fügeabschnitts der Radnabe bzw. des Trägerelements beispielsweise an einem Umfang in der oder um die Nabenöffnung der Radnabe bzw. an einem äu-ßeren oder inneren Umfang des Stutzens des Trägerelements stetig erweiternd bzw. stetig verjüngend ausgebildet, kann ein konisch verlaufender Querschnitt der Nabenöffnung des Fügeabschnitts der Radnabe bzw. ein konisch verlaufender Querschnitt des Stutzens des Trägerelements geschaffen werden.

Diese Ausführung verbessert einerseits die Fügebedingungen bei der Herstellung der Verbindung, insbesondere durch eine leichtere Zentrierbarkeit der zu fügenden Bauteile (z.B. Radnabe mit Nabenöffnung und Stutzen des Trägerelements), und kann andererseits die Wirkung einer Vorspannung zur Erzeugung einer Presspassung intensivieren.

Nach einer weiteren vorteilhaften Ausgestaltung weist der Fügeabschnitt der Radnabe und/oder der Fügeabschnitt des Trägerelements wenigstens ein axial wirkendes Formschlusselement auf.

Dieses Formschlusselement kann in Richtung der Radnabenachse gesehen lokal innerhalb der Fügeabschnitte der Radnabe und/oder des Trägerelements oder am Ende der Fügeabschnitte der Radnabe und/oder des Trägerelements angeordnet sein und kann punktuell radial erstreckt, wie ein oder mehrere um den Umfang der Radnabenachse verteilte Laschen, oder umlaufend radial erstreckt, wie beispielsweise ein Flansch, ausgebildet sein.

Dieses zusätzliche Formschlusselement verhindert eine Relativ-Verschiebung zwischen den der Fügepartner (Radnabe und Trägerelement) in Richtung der Radnabenachse R und bietet damit eine zusätzliche axiale Sicherung der Verbindung der Fügepartner.

Weist das Material des Trägerelements im Verhältnis zur Steifigkeit der Tragstruktur der Radnabe aus Faserverbundmaterial eine größere Steifigkeit auf, kommen in dieser Kombination der Fügepartner die vorstehend geschilderten Vorzüge besonders deutlich zum Tragen und es kann eine besonders feste Verbindung zwischen der Radnabe aus Faserverbundmaterial und dem Trägerelement geschaffen werden.

Vorzugsweise besteht das Trägerelement aus einem metallischen Werkstoff, welcher eine höhere Steifigkeit gegenüber dem Faserverbundmaterial der Radnabe aufweist.

Dies erweist sich als besonders vorteilhaft bei einer angewandten Presspassung zwischen der Radnabe aus Faserverbundmaterial und dem höher festen Trägerelement. Hierbei wird beispielsweise erreicht, dass sich bei einer Pressverbindung zwischen den Fügeabschnitten der Radnabe und des Trägerelements nur das Faserbundmaterial der Radnabe gerichtet weitet (je nach Ausführung des Trägerelements und der Radnabe). Mit einer darauf abgestimmten, gezielten Anordnung der Fasern können die speziellen Eigenschaften der Fasern bzw. des Faserverbundmaterials hinsichtlich der Dehnbarkeit und Vorspannungswirkung zum Vorteil der Verbindungsfestigkeit ausgenutzt werden.

Nach einer besonders bevorzugten Ausgestaltung weist die Radnabe im Bereich des Fügeabschnitts Faserlagen mit in Umfangsrichtung der Radnabenachse unidirektional angeordneten Fasern auf.

Dabei werden im Bereich einer Radnabe mit einer Tragstruktur aus Faserverbundmaterial zusätzliche Faserlagen (sogenannte UD-Faserlagen) verwendet, welche in Umfangsrichtung um die Radnabenachse unidirektional angeordneten Fasern, wie beispielsweise Kohlenstofffasern, enthalten oder aus solchen bestehen. Diese Faserlagen sind in der Art einer Bandage um eine Tragstruktur aus Faserverbundmaterial der Radnabe gelegt. Beispielsweise können sie die Tragstruktur der Radnabenöffnung umschließen und vorzugsweise ein umlaufendes Oberflächenprofil des Fügeabschnitts der Radnabe umfassen.

Dies erweist sich ebenfalls als besonders vorteilhaft bei einer angewandten Presspassung zwischen der Radnabe aus Faserverbundmaterial und dem höher festen Trägerelement.

Beim beispielsweisen Einpressen eines Stutzens des Trägerelements in die Nabenöffnung der Radnabe weitet sich der die Nabenöffnung umgebende Fügeabschnitt der Radnabe, wobei die die Nabenöffnung umfassenden UD-Faserlagen unter Erzeugung einer definierten Zugspannung gedehnt werden. Die Dehnung der UD-Faserlagen bleibt infolge der unidirektionalen Ausrichtung und der hohen Festigkeit der Fasern in ihrer Längserstreckung dauerhaft erhalten.

Damit wird eine definierte, besonders hohe und dauerhafte Vorspannung im Material der Radnabe verwirklicht, welche die Verbindung zwischen dem Trägerelement und der Radnabe bzw. dem Fahrzeugrad noch sicherer und zuverlässiger macht.

Gleichzeitig können durch diese Ausbildung der Fahrzeugradanordnung alle um und in Richtung der Radnabenachse auftretenden Kräfte und Momente von der Kraftübertragungseinheit über das Trägerelement auf die Radnabe und damit auf das Fahrzeugrad und umgekehrt zuverlässig übertragen werden.

Erstrecken sich die UD-Faserlagen in Richtung der Radnabenachse über den gesamten Bereich des Fügeabschnitts der Radnabe kann zudem eine besonders gleichmäßige Vorspannung in der Radnabe erzeugt werden.

Ist das Oberflächenprofil des Fügeabschnitts der Radnabe nach einer weiteren vorteilhaften Gestaltung von mindestens einer Materiallage gebildet, welche von der Tragstruktur des Faserverbundwerkstoffs der Radnabe ausgenommen ist, können lokal auf das Oberflächenprofil wirkende Verpresskräfte während des Einpressens des Trägerelements durch eine oder mehrere Materiallagen (Opferlagen) aufgenommen werden, die keine unmittelbare Tragfunktion für das Rad bzw. die Radnabe ausüben und für die Ausführung der form- und kraftschlüssigen Verbindung "geopfert" werden, so dass eine eventuelle Beschädigung der darunter liegenden tragender Faserlagen des Faserverbundwerkstoffs vermieden werden kann und damit die Tragstruktur des Faserverbundwerkstoffs der Radnabe vor Beeinträchtigung ihrer Trageigenschaften geschützt bleibt.

Beispielsweise kann das Oberflächenprofil des Fügeabschnitts der Radnabe von mindestens einer von der Tragstruktur des Faserverbundwerkstoffs der Radnabe gesonderten Lage aus glasfaserverstärktem Kunststoff gebildet sein.

Der Einsatz von derartigen Materiallagen (Opferlagen)im Oberflächenprofil des Fügeabschnitts der Radnabe sorgt für einen gesonderten mechanischen Schutz des Oberflächenprofils des Fügeabschnitts der Radnabe, beispielsweise beim Pressvorgang zur Herstellung einer Presspassung zwischen dem Trägerelement und der Radnabe.

Bei einer Kombination der Fügepartner, bei der die Radnabe aus kohlenstofffaserverstärktem Kunststoff und das Trägerelement metallisch ausgebildet ist, erzeugt insbesondere ein aus Glasfaserlagen gebildetes Oberflächenprofil zudem eine vorteilhafte galvanische Isolation zwischen dem Trägerelement und der Radnabe, so dass materialschädigende Korrosionserscheinungen weitestgehend vermieden werden können.

Vorzugsweise kann das metallische Trägerelement zur Erhöhung der Zuverlässigkeit des galvanischen Schutzes der Radnabe beispielsweise mittels einer Hartanodisierung oder einer Eloxierung beschichtet sein.

Gemäß einer weiteren vorteilhaften Ausführungsform der Erfindung weist die Tragstruktur im Bereich der Fügeabschnitt der Radnabe aus Faserverbundwerkstoff eine oder mehrere Lagen aus glasfaserverstärktem Kunststoff auf.

Die bei der Ausführung einer Radnabe mit einer Tragstruktur aus Faserverbundmaterial im Bereich ihres Fügeabschnitts in die Tragstruktur integrierten Glasfasern bzw. Glasfaserlagen ermöglichen durch ihre besondere Festigkeit die Übertragung von noch höheren Drehmomenten und Querkräften.

Zur Erzielung noch höherer Reibwerte bei der Verbindung zwischen den Fügepartnern ist es vorgesehen, dass die Radnabe und das Trägerelement im Bereich der Fügeabschnitte mittels eines Klebstoffes, aus vorzugsweise hochfestem Kunststoff, verbunden sind.

In der Kombination aus Form- und/oder Kraft- und/oder Stoffschluss können noch höhere Kräfte und Momente über die Verbindung des Trägerelements mit der Radnabe am Fahrzeugrad übertagen werden.

Der vor dem Aushärten zähflüssig beschaffene Klebstoff kann zudem im Falle einer Pressverbindung des Trägerelements mit der Radnabe den Pressvorgang aufgrund der (noch) geringen Reibung erleichtern.

Bei der Ausführung einer Radnabe aus Faserverbundmaterial ist der Klebstoff vorzugsweise kriechfähig ausgebildet, so dass der Klebstoff vor dem Aushärten vorhandene Mikroporen im faserverstärktem Kunststoff des Fügeabschnitts der Radnabe ausfüllt. Das dient der weiteren Erhöhung der Reibwerte zwischen den speziellen Fügepartnern (Trägerelement, Radnabe).

Nach einer alternativen Ausführungsform ist die Radnabe und das Trägerelement im Bereich der Fügeabschnitte mittels eines härtbaren Matrixmaterials des Faserverbundwerkstoffs der Radnabe verbunden, was beispielsweise bei einem gemeinsamen Form- und Infiltrationsprozesses der Fügepartner erfolgen kann.

Bei dieser Ausführungsform entfällt das nachträgliche Fügen der gesondert gefertigten Radnabe bzw. des gesondert gefertigten Fahrzeugrads mit dem Trägerelement. Die Verbindung der Fügepartner erfolgt während der Fertigung der Radnabe bzw. des Fahrzeugrads durch Infiltration und Konsolidierung (Aushärtung) des Faserverbundwerkstoffes.

Der stoffliche Verbund mittels des Matrixmaterials kann dieselben Vorteile bei der Übertragung der Kräfte und Momente über die Verbindung des Trägerelements mit der Radnabe erzielt werden.

In einer vorteilhaften Ausführungsform der geklebten bzw. konsolidierten Fügepartner weist der Klebstoff oder das Matrixmaterial an einer Kontur im Übergang der verbundenen Fügeabschnitte des Trägerelements und des Fügeabschnitts der Radnabe eine Verdickung auf.

Diese Verdickung, die beispielsweise als eine Wulst entlang einer Verbindungskontur ausgebildet sein kann, dient der Minimierung von Kerbwirkungen, die durch Spannungsspitzen aufgrund des Steifigkeitsüberganges im Material der verbundenen, durch den Fahrbetrieb mechanisch belasteten Fügepartner hervorgerufenen werden können und das Material der Fügepartner, insbesondere das Faserverbundmaterial der Radnabe, beeinträchtigen könnten.

Diese Kerbwirkungen können beispielsweise an einem durch die Verbindung entstandenen unsteten, sprunghaften Konturenübergang zwischen den Fügepartnern und besonders bei Fügepartnern mit unterschiedlicher Steifigkeit, wie beispielsweise bei der Radnabe aus Faserverbundwerkstoff in Verbindung mit einem Trägerelement aus Metall, auftreten.

Derartigen Gefahren der Materialbeeinträchtigung der Radnabe kann durch eine verdickende Auflage des Klebstoffs oder des Matrixmaterials in diesem Konturenübergang wirksam entgegengewirkt werden.

Die Aufgabe ein Verfahren zur Herstellung einer erfindungsgemäßen Fahrzeugradanordnung mit einer Radnabe aus Faserverbundmaterial bereitzustellen, wird vorteilhafter Weise durch die Merkmale und Verfahrensschritte des Verfahrensanspruchs 16 und im Weiteren durch Kombinationen mit den Merkmalen und Verfahrensschritten der auf den Verfahrensanspruchs 16 rückbezogenen Verfahrensansprüche gelöst.

Bei dem Verfahren werden die zunächst gesondert vorgefertigten Fügepartner (Fahrzeugrad bzw. Radnabe des Fahrzeugrades und Trägerelement) anschließend in Richtung der Radnabenachse formschlüssig aneinander oder ineinander gefügt.

Das Fahrzeugrad bzw. die Radnabe des Fahrzeugrades aus Faserverbundmaterial wird mit wenigstens einem Fügeabschnitt vorgefertigt, der im Fügezustand der Fahrzeuganordnung mit dem Fügeabschnitt wenigstens eines Trägerelements korrespondieren soll.

Bei der Vorfertigung der Radnabe wird das Oberflächenprofil des Fügeabschnitts der Radnabe in eine Materiallage der Radnabe eingeformt bzw. eingefräst, welche als eine Opferlage vorgesehen ist. Diese Materiallage kann beispielsweise eine glasfaserverstärkte Kunststoffschicht sein. Damit bleibt die tragende Struktur des Faserverbundmaterials im Bereich des Fügeabschnitts der Radnabe erhalten und wird nicht durch das Einformen oder Einfräsen des Oberflächenprofils geschwächt. Eine glasfaserverstärkte Kunststoffschicht bietet zudem eine Schutz-und Isolationsfunktion vor Kontaktkorrosion zwischen der Radnabe und dem Trägerelement.

Für die Schaffung einer zusätzlichen Sicherung der Verbindung der Radnabe mit dem Trägerelement durch einen Formschluss in axialer Richtung der Radnabenachse kann ein Fügeabschnitt der Radnabe und/oder ein Fügeabschnitt des Trägerelements mit einem axial wirkenden Formschlusselement ausgebildet sein, der eine axiale Relativ-Verschiebung der Radnabe und des Trägerelements zueinander verhindert. Das Formschlusselement kann beispielsweise an einem Ende des Fügeabschnitts vorgesehen sein, was insbesondere für das Verfahren des An- oder Ineinanderfügens von vorgefertigten Fügepartnern günstig ist.

Für die Schaffung einer zusätzlichen Sicherung der Verbindung der Radnabe mit dem Trägerelement durch einen Kraftschluss kann das erste oder das zweite Oberflächenprofil zumindest abschnittsweise mit einem Übermaß gegenüber dem zweiten bzw. dem ersten Oberflächenprofil ausgebildet werden, so dass beim Ineinanderfügen der Oberflächenprofile der korrespondierenden Fügeabschnitte zumindest teilweise eine Presspassung zwischen der Radnabe und dem Trägerelement erzeugt wird. Dabei kann das Faserverbundmaterial im Bereich des Fügeabschnitts der Radnabe aufgeweitet werden, was die Spannung im Gefüge des Faserverbundmaterials erhöht, die für einen starken Kraftschluss sorgt.

Im Bereich des Fügeabschnitts der Radnabe können eine oder mehrere Faserlagen (UD-Lagen) mit in Umfangsrichtung der Radnabenachse unidirektional angeordneten Fasern auf oder eingebracht werden. Diese bandagieren den Fügeabschnitt der Radnabe zur Erhöhung der Festigkeit der Radnabe in diesem Bereich.

Wird das Faserverbundmaterial infolge einer Presspassung zwischen der Radnabe und dem Trägerelement im Bereich des Fügeabschnitts der Radnabe aufgeweitet, können die DU-Lagen innerhalb ihrer Dehnungsgrenze eine permanente Vorspannung, z.B. als Druckspannung, erzeugen und gewährleisten somit eine besonders zuverlässige und dauerhafte Verbindung zwischen der Radnabe und dem Trägerelement.

Für die Schaffung einer zusätzlichen Sicherung der Verbindung der Radnabe mit dem Trägerelement durch einen Stoffschluss kann vor dem Fügen der Radnabe mit dem Trägerelement das erste und /oder das zweite Oberflächenprofil der korrespondierenden Fügeabschnitte mit einem geeigneten, aushärtbaren Klebstoff eingestrichen werden. Der sich hierbei zwischen der Radnabe und dem Trägerelement befindliche Kleber kann den Reibwert zwischen den Fügepartner erhöhen und zusätzlich einen Korrosionsschutz bieten.

Eine beim Fügen der Radnabe mit dem Trägerelement, insbesondere beim An- oder Ineinanderfügen der Oberflächenprofile der korrespondierenden Fügeabschnitte überschüssig austretende Menge des Klebstoffs kann als eine Wulst entlang eines Konturenübergangs der verbundenen Fügepartner ausgebildet und ausgehärtet werden.

Beispielsweise kann eine bestimmte Überschussmenge des Klebstoffs, die beim An- oder Ineinanderfügen der Oberflächenprofile entlang der Radnabenachse geschoben wird, am Ende der korrespondierenden Fügeabschnitte austreten und bildet - im ausgehärteten Zustand - eine Wulst entlang eines Konturenübergangs der verbundenen Fügepartner, welche einen kontinuierlichen Übergang der Steifigkeitsänderung zwischen dem Trägerelement und der Radnabe aus Faserverbundmaterial bewirkt und damit die Kerbwirkung in diesem Bereich verringert.

Alternativ zu dem voraus beschriebenen Verfahren nach Anspruch 16 kann die Verbindung zwischen der Radnabe und dem Trägerelement zur Herstellung der erfindungsgemäßen Fahrzeugradanordnung auch in einem gemeinsamen Form- und Infiltrationsprozess ausgeführt werden, wobei beispielsweise trockene oder mit härtbaren Matrixmaterial imprägnierte Faserlagen zur Bildung der Radnabe bzw. des Fahrzeugrades in verschiedenen Faserablagemethoden unmittelbar an oder auf einem Fügeabschnitt des mit dem gewünschten Oberflächenprofil vorgefertigten Trägerelements abgelegt werden, wobei der Fügeabschnitt der Radnabe mit dem entsprechend formschlüssig ausgebildeten Oberflächenprofil erzeugt wird, ggf. das gebildete Faserhalbzeug der Radnabe mit härtbaren Matrixmaterial infiltriert wird und das Faserhalbzeug der Radnabe gemeinsam mit dem verbundenen Trägerelement konsolidiert (ausgehärtet) wird, so dass in einem integralen Fertigungsprozess eine form- und stoffschlüssige Verbindung zwischen der Radnabe und dem Trägerelement erzeugt wird.

Das Oberflächenprofil des Fügeabschnitts der Radnabe wird unmittelbar im Kontakt mit dem Oberflächenprofil des Trägerelements geformt, das hierbei als Formwerkzeug dient, wodurch zugunsten des Erhalts der Festigkeit des Faserverbundmaterials eine Fräsung der Faserlagen der Radnabe entfällt, bei der Fasern zwangsläufig durchtrennt werden.

Das auf das konturierte Oberflächenprofil des Trägerelements aufgebrachte Faserhalbzeug sorgt bereits während des Preforming-Prozesses für einen wirksamen Formschluss, welcher ein Verdrehen oder Verrutschen der Fügepartner verhindert. Hierbei entfällt zudem der Vorgang des nachträglichen Fügens einer vorgefertigten Radnabe bzw. eines vorgefertigten Fahrzeugrades mit dem Trägerelement, insbesondere entfällt auch ein nachträgliches Verpressen der Fügepartner
Die Verfahrensmerkmale nach den Ansprüchen 17, 19 und 21 können analog auch bei diesem Verfahren angewandt werden.

Die erfindungsgemäße Fahrzeugradanordnung wird nachfolgend an mehreren Ausführungsbeispielen näher erläutert. Die zugehörigen Zeichnungen zeigen in einer schematischen Darstellung in
- Fig. 1: isometrische Darstellung einer Fahrzeugradanordnung für ein Motorrad mit einem Vorderrad und zwei Trägerelementen,
- Fig. 2: Explosionsdarstellung eines Ausschnitts der Fahrzeugradanordnung nach Fig. 1 im Bereich der Radnabe,
- Fig. 3: Querschnittansicht quer zur Radnabenachse im Schnitt A-A durch die Verbindungstelle zwischen der Radnabe und einem Trägerelement nach Fig. 1 und 2,
- Fig. 4: Detailansicht A aus der Schnittansicht nach Fig. 3,
- Fig. 5: Längsschnittansicht längs der Radnabenachse im Schnitt B-B durch einen Ausschnitt der Fahrzeugradanordnung nach Fig. 1,
- Fig. 6: Längsschnittansicht längs der Radnabenachse durch einen Ausschnitt der Fahrzeugradanordnung nach Fig. 1 mit einem alternativen Lagenaufbau,
- Fig. 7: Detailansicht B aus der Schnittansicht nach Fig. 6,
- Fig. 8: isometrische Darstellung einer Fahrzeugradanordnung für ein PKW-Rad mit einem Vorderrad und zwei Trägerelementen,
- Fig. 9: Explosionsdarstellung der Fahrzeugradanordnung nach Fig. 8,
- Fig. 10: Längsschnittansicht längs der Radnabenachse im Schnitt C-C durch die Fahrzeugradanordnung nach Fig. 8.

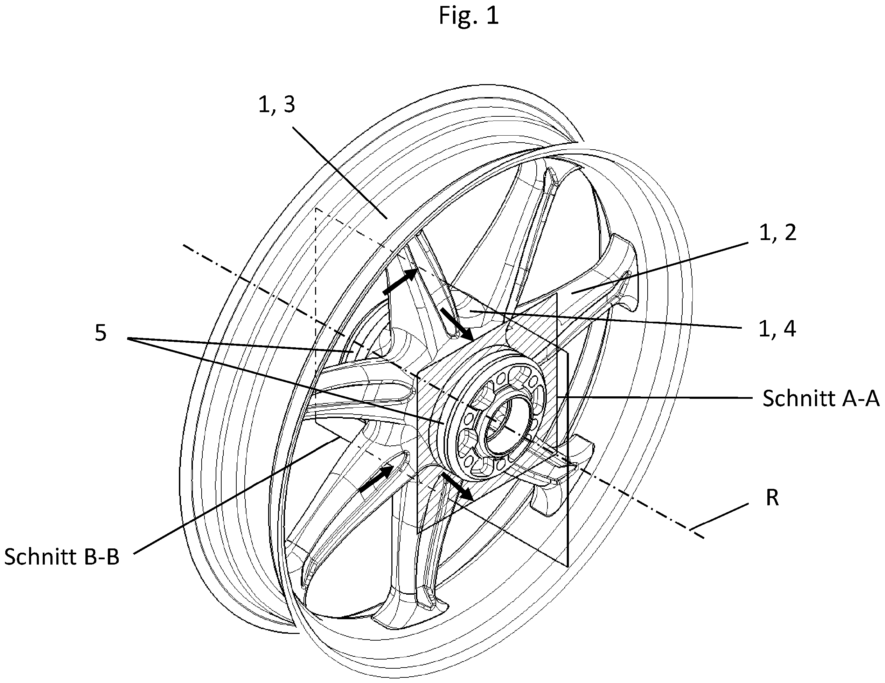

Die Figuren 1 bis 7 zeigen ein Beispiel einer erfindungsgemä-ßen Fahrzeugradanordnung für ein Motorrad, bestehend aus einem Vorderrad 1 des Motorrades und zwei Trägerelementen 5.

Zugleich wird nachfolgend zu den Figuren 1-7 ein bevorzugtes Verfahren zur Herstellung der erfindungsgemäßen Fahrzeugradanordnung beschrieben.

Das Vorderrad 1 nach Fig. 1 setzt sich aus einem Radstern 2 mit einer Radnabe 4 und einer Radfelge 3 zusammen und besteht aus Faserverbundwerkstoff (FVW), wie zum Beispiel aus kohlenfaserverstärktem Kunststoff (CFK). Die beiden Trägerelemente 5 sind beidseitig der Radnabe 4 angeordnet und können jeweils eine Bremsscheibe einer Bremseinheit aufnehmen (nicht dargestellt). Die beiden Trägerelemente 5 bestehen aus einem metallischen Werkstoff.

Die Bremseinheit stellt einer der möglichen Kraftübertragungseinheiten dar, die mittels der Trägerelemente 5 mit dem Fahrzeugrad 1 verbunden sein können. Bei einer hier nicht dargestellten Fahrzeugradanordnung für ein Hinterrad eines Motorrades kann beispielsweise einer der beiden Trägerelemente eine Bremsscheibe der Bremseinheit und das andere Trägerelement eine Antriebseinheit aufnehmen.

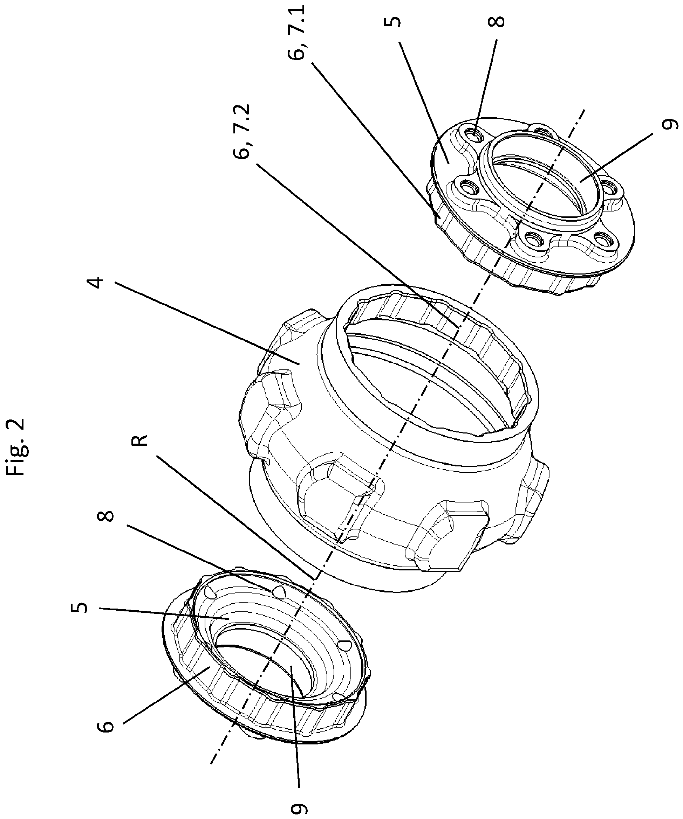

Fig. 2 zeigt in einer Explosionsdarstellung der erfindungsgemäßen Fahrzeugradanordnung einen vergrößerten Ausschnitt des Vorderrades 1 nach Fig. 1 im Bereich der Radnabe 4 mit den beiden vereinzelt dargestellten Trägerelementen 5 im Vormontagezustand.

Der Übersichtlichkeit halber ist vom Vorderrad 1 lediglich die Radnabe 4 mit den Ansätzen der Speichen des Radsterns 2 dargestellt.

Die metallischen Trägerelemente 5 sind jeweils in der Art einer Buchse ausgebildet, die der Radnabe 4 zugewandt, in axialer Erstreckung der Radnabenachse R einen hohlzylindrischen Stutzen aufweisen, an dessen äußeren Umfang jeweils ein umlaufender Fügeabschnitt 6 ausgebildet ist.

An einem der Radnabe 4 abgewandten Ende des Stutzens ist das Trägerelement 5 mit einem scheibenförmigen Lagerflansch ausgebildet. Der Lagerflansch weist eine zentrische Öffnung 9 mit einem Lagersitz 9 für die Lagerung des Trägerelements 5 auf einer hier nicht dargestellten Radachse auf.

Um den Umfang der Öffnung 9 des Lagerflansches des Trägerelements 5 sind mehrere (im Ausführungsbeispiel sechs) durch den hohlzylindrischen Stutzen des Trägerelements 5 durchgehende Gewindebohrungen 8 für die Befestigung der nicht dargestellten Bremsscheibe vorgesehen.

Die Bremsscheibe sitzt auf einem äußeren Umfang des Lagersitzes 9 des Lagerflansches und liegt flächig an einer um die Gewindebohrungen 8 massereduziert ausgebildeten Kontaktfläche des Lagerflansches an.

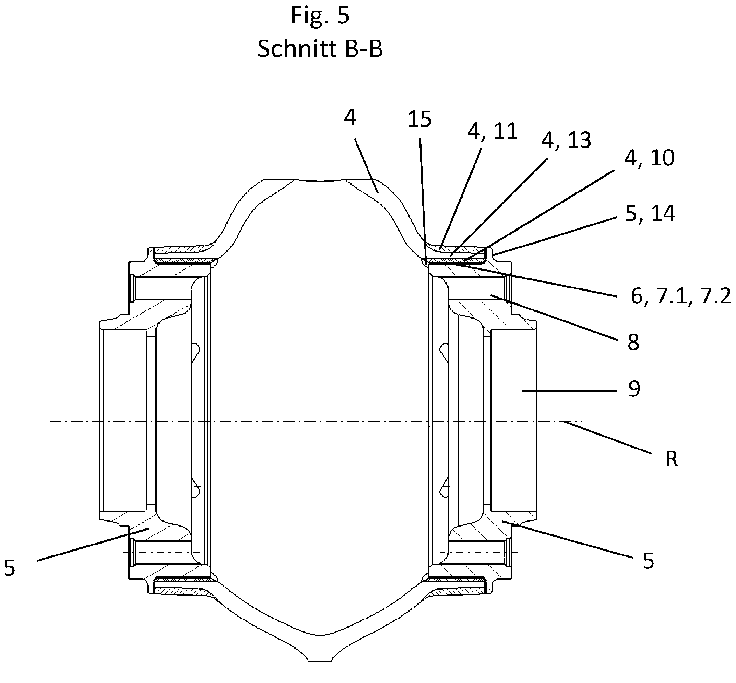

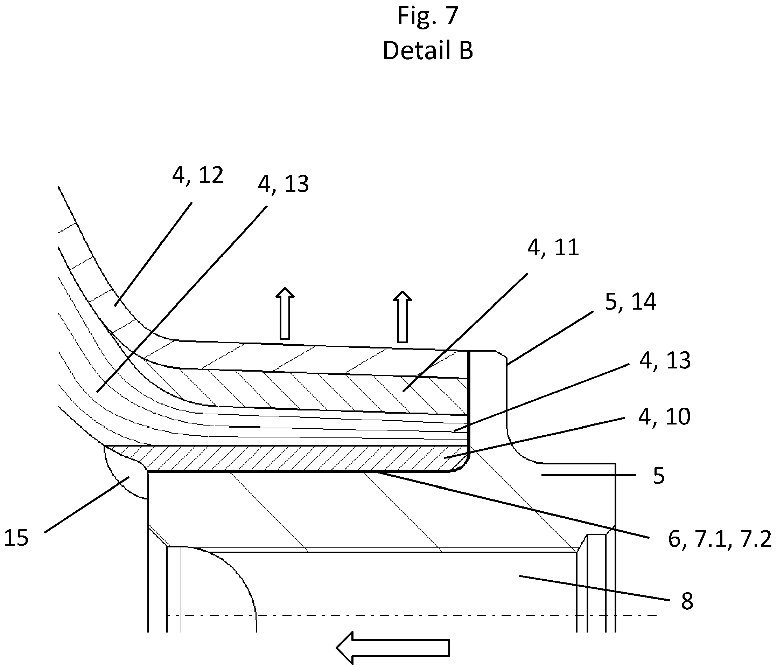

In radialer Erstreckung weist der Lagerflansch des Trägerelements 5 einen den Stutzen überragenden Bundkragen 14 auf. Dessen Funktion ist zu Fig. 5 und 7 näher erläutert.

Die Radnabe 4 weist in axialer Erstreckung der Radnabenachse R beidseitig je einen Bundflansch auf, der jeweils eine zentrale Nabenöffnung umschließt und an dem innenseitig jeweils ein umlaufender Fügeabschnitt 6 ausgebildet ist. Das Oberflächenprofil 7 des Fügeabschnitts 6 jedes der Trägerelemente 5 weist um den Umfang verteilt angeordnete Wellendorne (7.1) auf, die mit den um den Umfang des Fügeabschnitts 6 der Radnabe 4 verteilt angeordneten Wellensenken 7.2 formschlüssig korrespondieren.

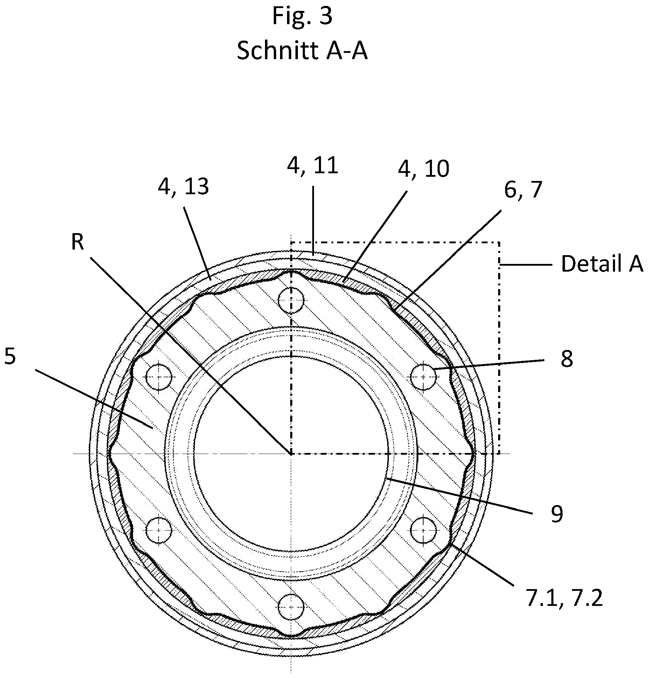

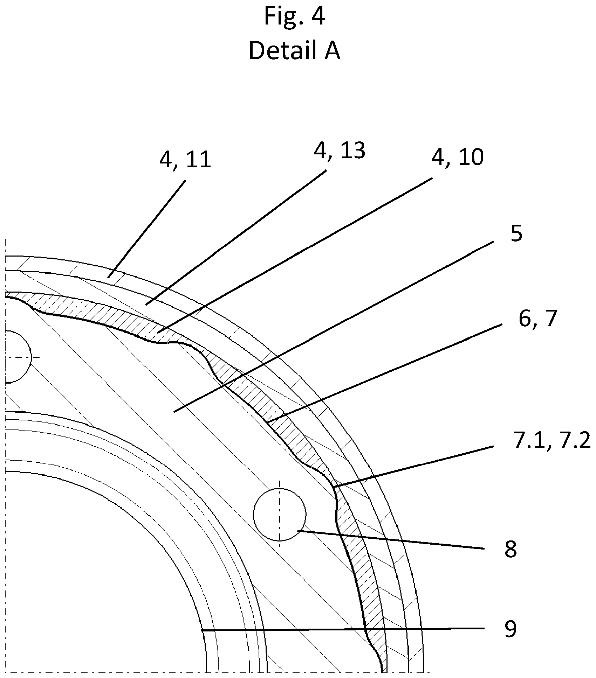

Das innenwandige Oberflächenprofil 7.2 des Bundflansches der Radnabe 4 ist in einer speziellen, verstärkenden Materiallage 10, hier aus glasfaserverstärktem Kunststoff (GFK), ausgebildet, welche die Faserlaminatlagen 13 der Tragstruktur des Faserverbundwerkstoffs der Radnabe 4 aus CFK innenwandig bedecken (siehe Fig. 3, 4).

Der Bundflansch der Radnabe 4 weist zudem einige den Umfang der CFK-Faserlagen 13 der Tragstruktur des Bundflansches in der Art einer Bandage umgebende Faserlagen aus unidirektionalen Fasern 11 (UD-Faserbandage) auf (siehe Fig. 3, 4).

Die formschlüssig ausgebildeten Fügepartner (Radnabe 4 und die Trägerelemente 5) werden gemäß dem Ausführungsbeispiel mittels einer Presspassung miteinander verbunden.

Der Fügeabschnitt 6 am Stutzen der jeweiligen Trägerelemente 5 ist zu diesem Zweck so ausgebildet, dass dessen Oberflächenprofil 7.1 ein geringfügiges radiales Übermaß gegenüber dem Oberflächenprofil 7.2 des Fügeabschnitts 6 am Bundflansch der Radnabe 4 aufweist.

Das Übermaß des Oberflächenprofils 7.1 des Fügeabschnitts 6 der Trägerelemente 5 kann zur Erleichterung der Montage zudem entlang der Radnabenachse R in Richtung des Lagerflansches ansteigend ausgebildet sein, so dass der Stutzen des Trägerelements 5 in axialer Richtung leicht konisch ausgebildet ist.

Der derart ausgebildete Stutzen des Trägerelements 5 wird in den entsprechend passend - mit einem radialen Untermaß -ausgebildeten Bundflansch der Radnabe 4 form- und kraftschlüssig eingepresst (siehe Fig. 3, 4).

Unter einer hierdurch erzeugten Vorspannung im Bundflansch der Radnabe 4 sitzt das Trägerelement 5 dauerhaft fest in der Radnabe 4 aus CFK, ohne das CFK-Material der Radnabe 4 sowohl durch das Einpressen des Stutzens des Trägerelements 5 als auch im Fahrbetrieb des Fahrzeugrades 1 ungünstig mechanisch zu belasten.

Im gefügten Zustand der Fahrzeugradanordnung können hohe Kräfte und Momente von der Bremseinheit über beide Trägerelemente 5 mit hoher Betriebssicherheit zuverlässig auf die Radnabe 4 und damit auf das Fahrzeugrad 1 übertragen werden.

Zusätzlich kann mit einem geeigneten Klebstoff, ein zusätzlicher Stoffschluss erzeugt werden, welcher zur Erhöhung der Reibwerte zwischen den beiden Fügepartnern (Radnabe 4, Trägerelement 5) dient und wodurch in der Kombination aus Form-, Kraft- und Stoffschluss eine Übertragung von noch höheren Kräften und Momenten erreicht werden kann.

Fig. 3 zeigt eine Schnittansicht senkrecht zur Radnabenachse R im Bereich der Verbindungsstelle zwischen einem Trägerelement 5 und der Radnabe 4 nach Fig. 1 und 2 im verbundenen Zustand.

Fig. 4 zeigt eine vergrößerte Detailansicht A aus der Schnittansicht nach Fig. 3.

In diesen Schnittansichten ist ein Querschnitt des metallischen Stutzens des Trägerelements 5 in seiner eingepressten Anordnung im Querschnitt des Bundflansches der Radnabe 4 aus CFK ersichtlich.

Ersichtlich sind auch die durch den hohlzylindrischen Körper des Trägerelements 5 führenden Gewindebohrungen 8 für die Befestigung der Bremsscheibe am Trägerelement 5.

Der Bundflansch der Radnabe 4 aus CFK weist als Tragstruktur 13 ein mehrlagiges Faserlaminat auf, wobei die Enden der CFK-Faserlagen 13 der Speichen des Radsterns 2 im Kern des Bundflansches auslaufen (vgl. Fig. 7).

Das Wellenprofil 7 des Stutzens des Trägerelements 5 weist insgesamt 12 Wellendorne 7.1 auf, die mit entsprechenden 12 Wellensenken 7.2 des Wellenprofils 7 des Bundflansches der Radnabe 4 formschlüssig korrespondieren, welche in die GFK-Lagen 10 des Bundflansches eingefräßt sind.

Die Wellendorne 7.1 ergeben in Umfangsrichtung des Stutzens entsprechende Hinterschnitte, die durch die korrespondierend bearbeiteten GFK-Lagen 10 des Bundflansches der Radnabe 4 ausgefüllt sind. Über die an den Bundflanschen ausgebildeten Wellensenken 7.2 können die beiden Trägerelemente 5 zueinander ausgerichtet werden und im gefügten Zustand den in Umfangsrichtung um die Radnabenachse R wirksamen Formschluss bilden.

Die Wellensenken 7.2 des Oberflächenprofils 7 des Bundflansches der Radnabe 4 sind ausschließlich in den GFK-Faserlagen 10 ausgebildet, so dass die CFK-Faserlagen 13 der Tragstruktur der Radnabe 4 unberührt bleiben. Die GFK-Faserlagen 10 werden insofern als sogenannte Opferlagen zu Gunsten des Festigkeitserhalts der Tragstruktur 13 der Radnabe 4 geopfert.

Die hohe Festigkeit der GFK-Lagen 10 ermöglicht zum einen die Übertragung besonders hoher Kräfte und Drehmomente und dient zum anderen als Schutz für die während des Einfügens / Einpressens des Stutzens des metallischen Trägerelements 5 in den Bundflansch der Radnabe 4 erhöht mechanisch beanspruchten Kontaktflächen des Oberflächenprofils 7.2 des Fügeabschnitts 6 der Radnabe 4 aus CFK und im weiteren zur galvanische Trennung der Radnabe 4 aus CFK gegenüber dem metallischen Trägerelement 5.

Der Bundflansch der Radnabe 4 erfährt durch das Einfügen/ Einpressen des Stutzens des Trägerelements 5 in den Bundflansch der Radnabe 4 eine Presspassung zwischen dem übermaßig ausgebildeten Wellenprofils 7.1 des Stutzens des Trägerelements 5 und dem Wellenprofil 7.2 des Bundflansches, die mit einer bestimmten radial gerichteten Aufweitung des Bundflansches verbunden ist (entsprechend der Pfeile in Fig. 7).

Dieser Vorgang erfolgt beidseitig der Radnabe 4 stetig und langsam in Richtung der Radnabenachse R, so dass sich die Bundflansche der Radnabe 4 in radialer Richtung gleichmäßig und allmählich aufweiten und sich die notwendige Vorspannung in der form- und kraftschlüssigen Verbindung der Fügepartner (4, 5) einstellt.

Zum Aufbau bzw. zur Erhöhung der infolge der radialen Aufweitung des Bundflansches der Radnabe erzeugten Vorspannung im Bundflansch ist der äußere Umfang des Bundflansches der Radnabe 4 in Umlaufrichtung des Bundflansches um die Radnabenachse R mit unidirektionale gerichteten CFK-Faserlagen 11 umwickelt, die eine feste Bandage um den Bundflansch bilden (UD-Faserbandage) .

Diese UD-Faserbandage 11 nimmt die Vorspannung als eine Zugspannung in den um den Umfang des Bundflansches gewickelten Fasern auf, die diese Zugspannung besonders gut kompensieren können. Die unidirektional gerichteten Fasern 11 in Umfangsrichtung um die Radnabenachse R sorgen für eine haltbare Vorspannung zur dauerhaften Sicherung der Verbindung zwischen dem Trägerelement 5 und der Radnabe 4 sowohl während des Fügens / Einpressens der Verbindung als auch während des Fahrzeugbetriebes.

Fig. 5 zeigt einen Längsschnitt B-B durch einen Ausschnitt der Fahrzeugradanordnung nach Fig. 1 entlang der Radnabenachse R. Der Übersichtlichkeit halber ist vom Vorderrad 1 lediglich die Radnabe 4 mit den Ansätzen der Speichen des Radsterns 2 dargestellt.

Die beiden Trägerelemente 5 sitzen unter der Presspassung beidseitig der Radnabe 4 fest in den beiden Bundflanschen. Fig. 5 zeigt den Verlauf der tragenden CFK-Faserlagen (13) von den Speichen des Radsterns 2 im Übergang in die Bundflansche der Radnabe 4, wobei im Bereich der Bundflansche die CFK-Tragstruktur 13 innenseitig durch die GFK-Faserlagen 10 bedeckt ist und außenseitig durch die um die CFK-Tragstruktur 13 des Bundflansches gewickelten, unidirektionalen CFK-Faserlagen 11 (UD-Bandagen) eingefasst ist.

Der Längsschnitt verläuft jeweils durch zwei der 12 Wellendorne 7.1 des Wellenprofils 7 des Stutzens des Trägerelements 5 und gleichzeitig durch zwei der 12 Wellensenken 7.2 des Wellenprofils 7 des Bundflansches der Radnabe 4. Im Bereich der Wellensenken 7.2 des Bundflansches zeigt sich eine gering, jedoch noch vorhandene Dicke des Lagenaufbaus der ausgefrästen GFK-Faserlagen 10.

Der detaillierte Laminatlagenaufbau des Bundflansches der Radnabe 4 ist noch deutlicher aus der Detailansicht B nach Fig. 7 ersichtlich.

Fig. 5 und Fig. 7 zeigen, dass die GFK-Faserlagen 10 und die als UD-Faserbandage gewickelten Faserlagen 11 sich in axialer Richtung der Radnabenachse R über den gesamten längserstreckten Bereich des Bundflansches erstrecken.

Aus Fig. 5 und 7 ist zudem gut ersichtlich, wie der Bundkragen 14 des Trägerelements als Formschlusselement 14 zur genauen, axialen Positionierung des Trägerelements 5 relativ zum Bundflansch der Radnabe 4 in Richtung der Radnabenachse R dient, ohne das weitere Füge- oder Verbindungselemente erforderlich wären.

Der im Ausführungsbeispiel verwendete Klebstoff zur Herstellung eines zusätzlichen Stoffschlusses kann vorzugsweise zwischen dem Bundflansch der Radnabe 4 und dem Stutzen des Trägerelements 5 in Richtung der Radnabenachse R ins Innere der Radnabe 4 verlaufen und nach seiner Aushärtung in Form einer dünnen Wulst 15 am Übergang zwischen dem Ende des Fügeabschnitts 6 am Stutzen des Trägerelements 5 und dem Ende des Fügeabschnitts 6 am Bundflansch der Radnabe 4 verbleiben (siehe auch Fig. 7).

Diese Klebstoffwulst 15 dient der Minimierung der Kerbwirkung am Übergang zwischen der Radnabe 4 aus Faserverbundwerkstoff und dem Trägerelement 5 aus Metall.

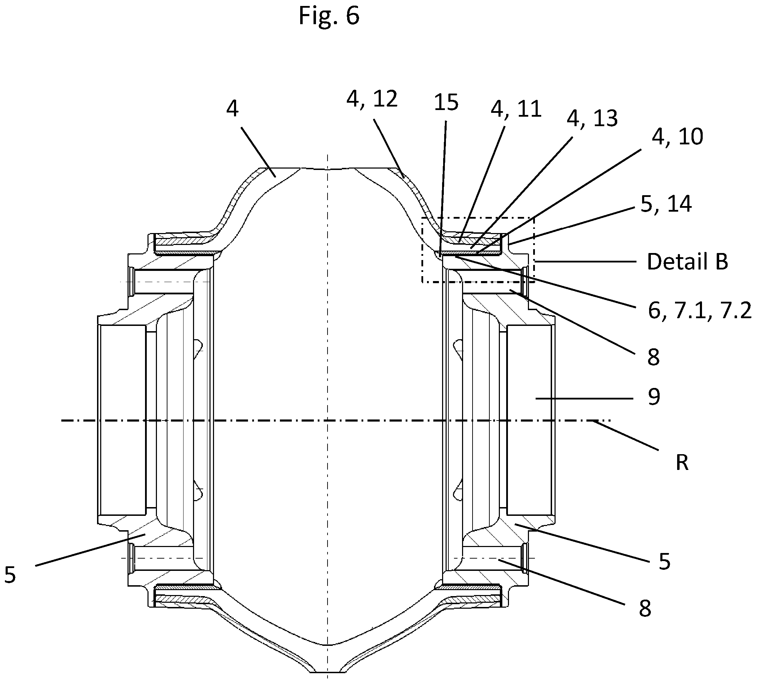

Der Längsschnitt nach Fig. 6 zeigt einen gegenüber der Ausführung nach Fig. 5 erweiterten Lagenaufbau der Radnabe 4.

Der Lagenaufbau der Radnabe 4 nach Fig. 6 ist prinzipiell analog zu Fig. 5 ausgebildet, weist allerdings eine zusätzliche Decklage 12 auf, die die Radnabe 4 teilweise oder vollständig umschließt. Beispielsweise kann die Radnabe 4 beidseitig durch jeweils eine Decklage 12 umschlossen sein, die um die Bundflansche der Radnabe 4 herum bis in den Speichenbereich des Radsterns 2 reichen und zwischen den Speichen zusammengeführt sind. Diese Decklage 12, aus beispielsweise einer eingefärbten CFK-Faserschicht, kann u. a. optischen Gestaltungszwecken und/oder als Schutz für die darunterliegenden Laminatlagen (Faserlagen der Tragstruktur 13, UD-Faserbandage 11) dienen.

Fig. 7 zeigt die Verbindungsstelle der Radnabe 4 mit den Trägerelementen 5 nach Fig. 6 in einer vergrößerten Detailansicht B, aus der der prinzipielle Laminatlagenaufbau des Bundflansches der Radnabe 4 nach Fig. 5, insbesondere der um die Deckschicht 12 erweiterte Laminatlagenaufbau des Bundflansches der Radnabe 4 nach Fig. 6 ersichtlich ist.

Aus der detaillierten Ansicht nach Fig. 7 ist unter anderem der Verlauf der von den Speichen des Radsterns 2 auslaufenden CFK-Faserlagen 13 ersichtlich, deren Enden im Bereich des Bundflansches in axialer Richtung der Radnabenachse R umgelenkt die Tragstruktur 13 des Bundflansches der Radnabe 4 bilden.

Die UD-Bandagen 11 laufen dagegen in Umfangsrichtung der Radnabenachse R um die von den Speichen auslaufenden CFK-Faserlagen 13.

Von den innenseitig angeordneten GFK-Faserlagen 10 verbleibt im Bereich der eingefrästen Wellensenken 7.2 eine dünne Schicht (mind. 0,1 mm) der Glasfaserlagen 10, um die besondere Festigkeit dieser Materiallage 10 gegenüber den CFK-Faserlagen der Tragstruktur 13 für den Formschluss nutzen zu können und um eine vollflächige galvanische Trennung der Radnabe 4 aus CFK zum metallischen Trägerelement 5 zu gewährleisten.

Der Stutzen eines jeden Trägerelements 5 wird soweit axial in den Bundflansch der Radnabe 4 eingeführt, dass die senkrechte Kontaktfläche des Bundkragens 14 als axiales Formschlusselement 14 des Trägerelements 5 an die vorzugsweise ebenso eben gefräste Stirnfläche des Bundflansches der Radnabe 4 anliegt und angedrückt ist.

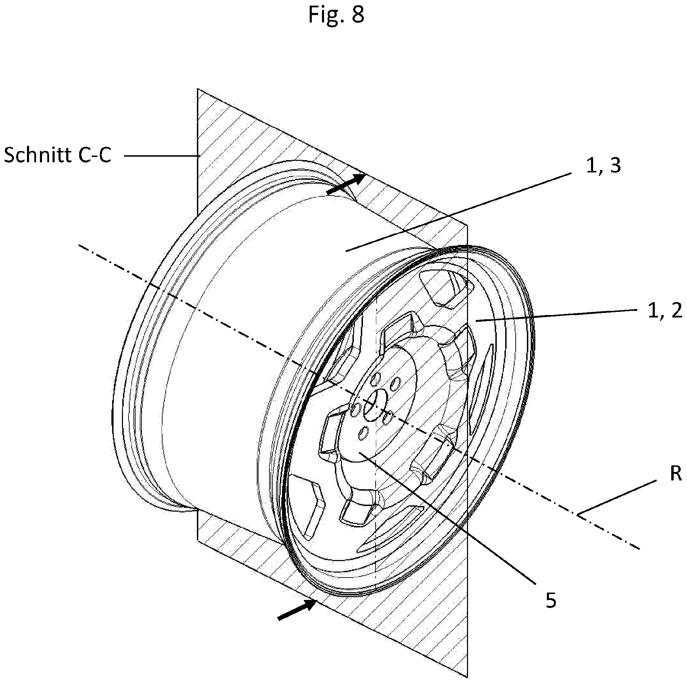

Fig. 8 zeigt eine Fahrzeugradanordnung für ein PKW-Rad, bestehend aus einem PKW-Vorderrad 1 und zwei Trägerelementen 5.

In der isometrischen Darstellung nach Fig. 8 ist nur ein Trägerelement 5 sichtbar. Das PKW-Vorderrad 1 weist einen Radstern 2 mit Radnabe 4 und eine Radfelge 3 auf und besteht aus Faserverbundwerkstoff (FVW), wie zum Beispiel aus kohlenfaserverstärktem Kunststoff (CFK). Die beiden Trägerelemente 5 bestehen aus einem metallischen Werkstoff.

Nachfolgend sollen im Wesentlichen nur die Unterschiede gegenüber dem Ausführungsbeispiel nach den Fig. 1 bis 7 dargelegt werden. Nicht explizit beschriebene Merkmale, Eigenschaften und Vorteile dieses Ausführungsbeispiels entsprechen der Beschreibung in dem Ausführungsbeispiel nach Fig. 1 bis 7.

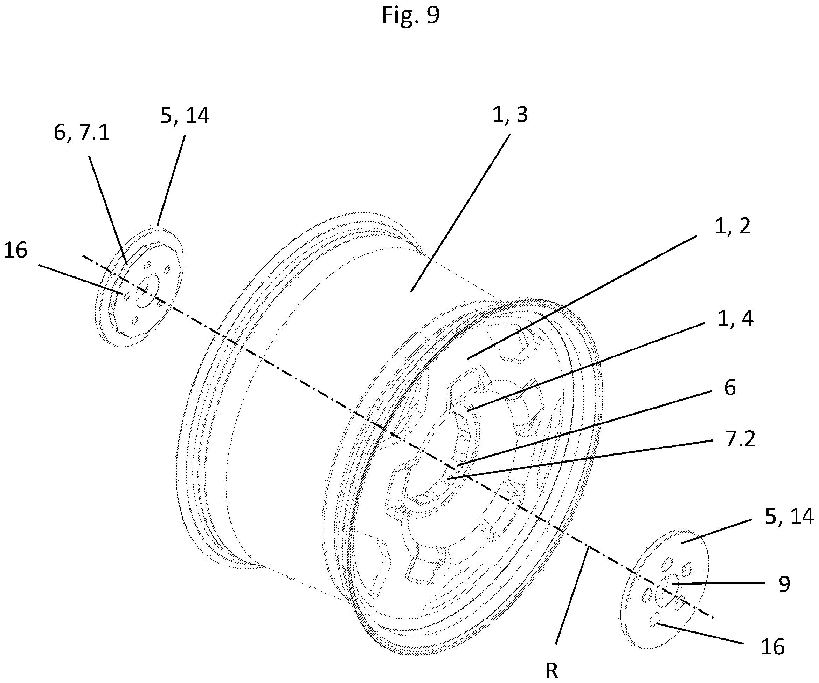

Fig. 9 zeigt in einer Explosionsdarstellung der erfindungsgemäßen Fahrzeugradanordnung das PKW-Vorderrad 1 nach Fig. 8 mit den beiden vereinzelt dargestellten Trägerelementen 5 im Vormontagezustand. Mittels der Trägerelemente 5 wird das PKW-Vorderrad 1 an einem Radträger aufgenommen, der mit einer Antriebswelle des PKWs verbunden ist (nicht dargestellt). Radträger und Antriebswelle stellen in diesem Ausführungsbeispiel die Kraftübertragungseinheit dar.

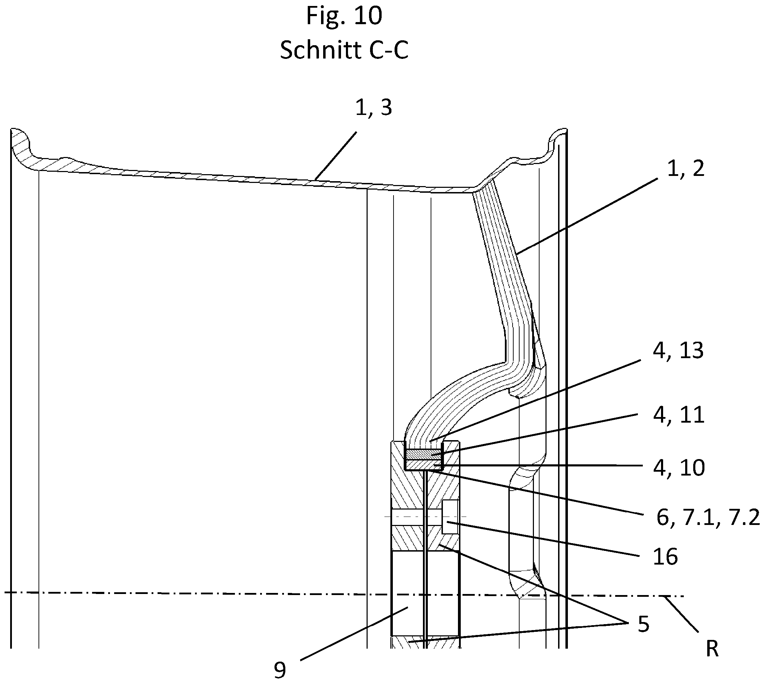

Die beiden Trägerelemente 5 werden im Montagezustand beidseitig der Radnabe 4 angeordnet, wobei jeweils ein radial erstreckter Bundkragen 14 eines jeden Trägerelements 5 als axiales Formschlusselement den umlaufenden Rand der zentralen Nabenöffnung der Radnabe 4 beidseitig einfasst und ein axial erstreckter Stutzen eines jeden Trägerelements 5 in die Nabenöffnung ragt, wie insbesondere aus Fig. 10 ersichtlich ist.

Fig. 10 zeigt einen Längsschnitt C-C durch die Fahrzeugradanordnung nach Fig. 8 entlang der Radnabenachse R.

Im Bereich der Nabenöffnung liegen sich die Stutzen der beiden Trägerelemente 5 aneinander gegenüber, wobei - axial begrenzt durch den jeweiligen Bundkragen 14 - noch ein minimaler, verbleibender Spalt zwischen den Stutzen bestimmt ist, so dass sich die Trägerelemente 5 nicht kontaktieren. Damit wird sichergestellt, dass die Trägerelemente 5 vollflächig und allein am Faserverbundmaterial der Radnabe 4 anliegen. Vorrangig wird jedoch hierdurch eine "Doppelpassung" der Verbindung zwischen einerseits dem jeweiligen Trägerelement 5 und der Radnabe und andererseits zwischen den Trägerelementen 5 untereinander vermieden. Ein zusätzlicher Kontakt der Trägerelemente 5 untereinander kann gerade im dynamischen Betrieb des Fahrzeugrades 1 zu einer Überbestimmung der Passstellen führen, welche die Stabilität der Verbindung zwischen Radnabe 4 und Trägerelement 5 nachteilig beeinträchtigen würde.

Die beiden Trägerelemente 5 weisen jeweils einen Lochkreis 16 mit fünf um den Umfang der Öffnung mit dem Lagersitz 9 verteilt angeordneten Durchgangsbohrungen 16 auf, die im Montagezustand zueinander deckungsgleich angeordnet sind und der Durchführung der (nicht gezeigten) Radschrauben durch die beiden Trägerelemente 5 hindurch dienen, so dass die Radschrauben zur Befestigung des PKW-Vorderrades 1 am PKW in den nicht gezeigten Radträger eingeschraubt werden können.

An der Innenseite der Nabenöffnung der Radnabe 4 ist ein umlaufender Fügeabschnitt 6 ausgebildet, dessen Oberflächenprofil 7 ein Wellenprofil 7 mit um den Umfang verteilt angeordnete Wellensenken 7.2 aufweist.

Dazu formschlüssig korrespondierend ist am äußeren Umfang des axial erstreckten Stutzens der Trägerelemente 5 jeweils ein umlaufender Fügeabschnitt 6 ausgebildet, dessen Oberflächenprofil 7 ein Wellenprofil 7 mit um den Umfang verteilt angeordnete Wellendorne (7.1) aufweist.

Der Radstern 2 weist als Tragstruktur ein mehrlagiges CFK-Faserlaminat 13 auf, wobei die CFK-Faserlagen 13 im Bereich der Radnabe 4 in Richtung der Nabenöffnung enden (gut ersichtlich in Fig. 10).

Die CFK-Faserlagen 13 der Radnabe 4 sind endseitig im Bereich der Nabenöffnung in Umfangsrichtung der Radnabenachse R umlaufend und axial entlang der Radnabenachse R vollflächig über den Fügeabschnitt 6 der Radnabe 4 erstreckt ausgebildet und ebenso mit unidirektionalen CFK -Faserlagen 11 (UD-Faserbandage) umkleidet.

Das innenwandige Oberflächenprofil 7 des Fügeabschnitts 6 der Radnabe 4 in der Nabenöffnung ist in den zur Profilverstärkung gesondert aufgebrachten GFK-Faserlagen 10 ausgebildet, in welche das Wellenprofil 7 (Wellensenken 7.2 des Fügeabschnitts 6 der Radnabe 4 eingefräßt ist (vgl. Fig. 10).

Das Oberflächenprofil 7 des Fügeabschnitts 6 am Stutzen der Trägerelemente 5 weist jeweils ein geringfügiges Übermaß gegenüber dem Oberflächenprofil 7 des Fügeabschnitts 6 der Radnabe 4 in der Nabenöffnung auf.

Die Stutzen der Trägerelemente 5 werden zur Erzeugung einer kombinierten Formschluss - und Presspassung zwischen der Radnabe 4 und den Trägerelementen 5 beiderseits in Richtung der Radnabenachse R in die Nabenöffnung form- und kraftschlüssig eingepresst.

Unter der durch die Presspassung und der damit verbundenen Aufweitung der Nabenöffnung erzeugten Vorspannung, welche durch die Zugspannung in den UD-Bandage-Lagen 11 wirksam kompensiert wird, sitzen die Trägerelemente 5 auch bei dieser erfindungsgemäßen Ausführung des PKW-Vorderrades 1 aus CFK dauerhaft fest in der Radnabe 4, ohne das CFK-Material der Radnabe 4 sowohl durch das Einpressen der Stutzen der Trägerelement 5 als auch im Fahrbetrieb des Fahrzeugrades 1 ungünstig mechanisch zu belasten.

Im gefügten Zustand dieser Fahrzeugradanordnung können somit ebenfalls hohe Kräfte und Momente von der Antriebswelle über die Trägerelemente 5 mit hoher Betriebssicherheit zuverlässig auf die Radnabe 4 und damit auf das Fahrzeugrad 1 übertragen werden.

Zusätzlich kann mit einem geeigneten Klebstoff ein Stoffschluss erzeugt werden, wodurch in Kombination aus Form-, Kraft- und Stoffschluss eine Übertragung von noch höheren Kräften und Momenten erreicht werden kann.

### Bezugszeichenliste

- 1: Rad, Motorrad-Vorderrad, PKW-Vorderrad
- 2: Radscheibe, Radstern,
- 3: Radfelge
- 4: Radnabe
- 5: Trägerelement
- 6: Fügeabschnitt
- 7: Oberflächenprofil, Wellenprofil, Wellendorn .1, Wellensenke .2
- 8: Gewindebohrungen
- 9: Öffnung mit Lagersitz
- 10: Materiallage, Opferlage, GFK-Faserlagen
- 11: unidirektionalen Fasern, UD-Faserbandage
- 12: Decklage
- 13: CFK-Faserlagen, Tragstruktur
- 14: Bundkragen, axiales Formschlusselement
- 15: Verdickung, Wulst
- 16: Lochkreis mit Durchgangsbohrungen
- R -: Radnabenachse

## Patentansprüche

1. Fahrzeugradanordnung, welche ein Rad (1) mit einer Radnabe (4) und mindestens ein Trägerelement (5) zur Lagerung des Rades (1) an einem Fahrzeugteil und/oder zur Anordnung einer Kraftübertragungseinheit aufweist, wobei die Radnabe (4) mindestens einen Fügeabschnitt (6) aufweist, der im Fügezustand der Fahrzeugradanordnung mit einem Fügeabschnitt (6) des Trägerelements (5) korrespondiert, wobei die Oberflächenprofile (7, 7.1, 7.2) der Fügeabschnitte (6) derart ausgebildet sind, dass im Fügezustand der Fahrzeugradanordnung die Radnabe (4) und das Trägerelement (5) zumindest in Umfangsrichtung der Radnabenachse (R) miteinander formschlüssig verbunden sind, **dadurch gekennzeichnet, dass** die Radnabe (4) eine Tragstruktur (13) aus Faserverbundwerkstoff aufweist.

2. Fahrzeugradanordnung, nach Anspruch 1, **dadurch gekennzeichnet, dass** der mindestens eine Fügeabschnitt (6) der Radnabe (4) in einer zentralen Nabenöffnung der Radnabe (4) ausgebildet ist.

3. Fahrzeugradanordnung, nach einem der Ansprüche 1 bis 2, **dadurch gekennzeichnet, dass** der mindestens eine Fügeabschnitt (6) der Radnabe (4) an einem in Richtung der Radnabenachse (R) erstreckten Bundflansch der Radnabe (4) ausgebildet ist.

4. Fahrzeugradanordnung, nach einem der Ansprüche 1 bis 3, **dadurch gekennzeichnet, dass** die Oberflächenprofile (7, 7.1, 7.2) der Fügeabschnitte (6) der Radnabe (4) und des Trägerelements (5) in Umfangsrichtung der Radnabenachse (R) zumindest abschnittsweise stufenförmig oder zahnförmig oder wellenförmig ausgebildet sind.

5. Fahrzeugradanordnung, nach einem der Ansprüche 1 bis 4, **dadurch gekennzeichnet, dass** die Oberflächenprofile (7, 7.1, 7.2) des Fügeabschnittes (6) der Radnabe (4) und des Trägerelements (5) derart aufeinander abgestimmt ausgebildet sind, dass die Radnabe (4) und das Trägerelement (5) zumindest teilweise mit einer Presspassung miteinander verbunden sind.

6. Fahrzeugradanordnung, nach einem der Ansprüche 1 bis 5, **dadurch gekennzeichnet, dass** das Oberflächenprofil (7, 7.2) des Fügeabschnitts (6) der Radnabe (4) und/oder das Oberflächenprofil (7, 7.1) des Fügeabschnitts (6) des Trägerelements (5) in Richtung der Radnabenachse (R) veränderlich ausgebildet ist.

7. Fahrzeugradanordnung, nach einem der Ansprüche 1 bis 6, **dadurch gekennzeichnet, dass** der Fügeabschnitt der Radnabe (4) und/oder der Fügeabschnitt des Trägerelements (5) wenigstens ein axial wirkendes Formschlusselement (14) aufweist.

8. Fahrzeugradanordnung, nach einem der Ansprüche 1 bis 7, **dadurch gekennzeichnet, dass** das Material des Trägerelements (5) im Verhältnis zur Steifigkeit der Tragstruktur (13) der Radnabe (4) aus Faserverbundmaterial eine größere Steifigkeit aufweist.

9. Fahrzeugradanordnung, nach einem der Ansprüche 1 bis 8, **dadurch gekennzeichnet, dass** die Radnabe (4) im Bereich des Fügeabschnitts (6) eine oder mehrere Faserlagen mit in Umfangsrichtung der Radnabenachse (R) unidirektional angeordnete Fasern (11) aufweist.

10. Fahrzeugradanordnung, nach einem der Ansprüche 1 bis 9, **dadurch gekennzeichnet, dass** das Oberflächenprofil (7, 7.2) des Fügeabschnitts (6) der Radnabe (4) von mindestens einer Materiallage / Opferlage (10) gebildet ist, welche von der Tragstruktur (13) des Faserverbundwerkstoffs der Radnabe (4) ausgenommen ist.

11. Fahrzeugradanordnung, nach einem der Ansprüche 1 bis 10, **dadurch gekennzeichnet, dass** die Tragstruktur (13) im Bereich des Fügeabschnitts (6) der Radnabe (4) eine oder mehrere Lagen aus glasfaserverstärktem Kunststoff aufweist.

12. Fahrzeugradanordnung, nach einem der Ansprüche 1 bis 11, **dadurch gekennzeichnet, dass** die Radnabe (4) und das Trägerelement (5) im Bereich der Fügeabschnitte (6) mittels eines Klebstoffes und/oder mittels eines härtbaren Matrixmaterials des Faserverbundwerkstoffs verbunden sind.

13. Fahrzeugradanordnung, nach Anspruch 11 oder 12, **dadurch gekennzeichnet, dass** der Klebstoff oder das Matrixmaterial an einer Kontur im Übergang der verbundenen Fügeabschnitte (6) des Trägerelements (5) und der Radnabe (4) eine Verdickung (15) aufweist.

14. Verfahren zur Herstellung einer Fahrzeugradanordnung nach einem der Ansprüche 1 bis 13 umfassend die folgenden Verfahrensschritte
- Vorfertigen einer Radnabe (4) bzw. eines Fahrzeugrades (1) aus Faserverbundmaterial mit wenigstens einem Fügeabschnitt (6), der im Fügezustand der Fahrzeuganordnung mit einem Fügeabschnitt (6) mindestens eines mit der Radnabe (4) zu fügenden Trägerelements (5) (Fügepartner) korrespondiert,
- wobei der Fügeabschnitt (6) der Radnabe (4) mit einer Materiallage (10) ausgebildet wird, die als eine Opferlage gegenüber der Tragstruktur (13) des Faserverbundwerkstoffs der Radnabe (4) vorbestimmt ist.
- Einformen oder Einfräsen eines ersten Oberflächenprofils (7.2) in den wenigstens einen Fügeabschnitt (6) der Radnabe (4), wobei das erste Oberflächenprofil (7.2) in die als Opferlage vorbestimmte Materiallage (10) der Radnabe (4) eingeformt bzw. eingefräst wird,
- Einformen oder Einfräsen eines zweiten, zum ersten Oberflächenprofil (7.2) zumindest in Umfangsrichtung der Radnabenachse (R) formschlüssig gebildeten Oberflächenprofils (7.1) in den korrespondierenden Fügeabschnitt (6) des Trägerelements (5),
- formschlüssiges An-oder Ineinanderfügen der Oberflächenprofile (7.1, 7.2) der korrespondierenden Fügeabschnitte (6) der Radnabe (4) und des Trägerelements (5) in Richtung der Radnabenachse (R).

## Claims

1. A vehicle wheel arrangement comprising: a wheel (1) with a wheel hub (4); and a at least one carrier element (5) for mounting the wheel (1) on a vehicle part and/or for arrangement of a power-transmitting unit, wherein the wheel hub (4) comprises at least one joining portion (6); in a joined state of the vehicle wheel arrangement said joining portion (6) of the wheel hub (4) corresponds with a joining portion(6) of the carrier element (5), wherein surface profiles (7, 7.1, 7.2) of the joining portions (6) are configured such that in the joined state of the vehicle wheel arrangement the wheel hub (4) and the carrier element (5) are connected to one another in form-fitting fashion at least in a circumferential direction of a wheel hub axis (R), **characterized in that** the wheel hub (4) includes a load-bearing structure (13) comprised of fiber-reinforced composite.

2. The vehicle wheel arrangement of claim 1, **characterized in that** the at least one joining portion (6) of the wheel hub (4) is located in a central hub opening of the wheel hub (4).

3. The vehicle wheel arrangement of claim 1 or 2, **characterized in that** the joining portion (6) of the wheel hub (4) is located on a collar flange, extending in a direction of the wheel hub axis (R) of the wheel hub (4).

4. The vehicle wheel arrangement of one of the claims 1 to 3, **characterized in that** the surface profiles (7, 7.1, 7.2) of the joining portions (6) of the wheel hub (4) and the carrier element (5) have a stepped form or a toothed form or an undulating form at least in some portions in the circumferential direction of the wheel hub axis (R).

5. The vehicle wheel arrangement of one of the claims 1 to 4, **characterized in that** the surface profiles (7, 7.1, 7.2) of the joining portion (6) of the wheel hub (4) and of the carrier element (5) are configured to coordinate with one another such that the wheel hub (4) and the carrier element (5) are at least partially connected via an interference fit.

6. The vehicle wheel arrangement of one of the claims 1 to 5, **characterized in that** the surface profile (7, 7.1, 7.2) of the joining portion (6) of the wheel hub (4) and/or the surface profile (7, 7.1) of the joining portion (6) of the carrier element (5) are variable in the direction of the wheel hub axis (R).

7. The vehicle wheel arrangement of one of the claims 1 to 6, **characterized in that** the joining portions of the wheel hub (4) and/or the joining portion (6) of the carrier element (5) include at least one axially acting form-fit element (14).

8. The vehicle wheel arrangement of one of the claims 1 to 7, **characterized in that** the material of the carrier element (5) has a greater stiffness than the fiber-reinforced composite of the load-bearing structure (13) of the wheel hub (4).

9. The vehicle wheel arrangement of one of the claims 1 to 8, **characterized in that** the wheel hub (4) includes in a region of the joining portion (6) one or more fiber plies with fibers (11) arranged unidirectionally in the circumferential direction of the wheel hub axis (R).

10. The vehicle wheel arrangement of one of the claims 1 to 9, **characterized in that** the surface profile (7, 7.2) of the joining portion (6) of the wheel hub (4) is formed by a material ply/sacrificial ply (10) that is separate from the load-bearing structure (13) of the fiber-reinforced composite of the wheel hub (4).

11. The vehicle wheel arrangement of one of the claims 1 to 10, **characterized in that** the load-bearing structure (13) includes in a region of the joining portion (6) of the wheel hub (4) one or more plies comprised of glass-fiber-reinforced plastic.

12. The vehicle wheel arrangement of one of the claims 1 to 11, **characterized in that** the wheel hub (4) and the carrier element (5) are connected in a region of the joining portions (6) by way of an adhesive and/or by way of a curable matrix material of the fiber-reinforced composite.

13. The vehicle wheel arrangement of the claim 11 or 12, **characterized in that** the adhesive or the matrix material includes a thickening at a contour in a transition of the connected joining portions (6) of the carrier element (5) and the wheel hub (4).

14. Method for producing a vehicle wheel arrangement according to one of the claims 1 to 13, comprising the following steps:
- Prefabricating the wheel hub (4) or the vehicle wheel (1) from fiber-reinforced composite with at least one joining portion (6), which in a joined state of the vehicle wheel arrangement corresponds with a joining portion (6) of at least one of the carrier elements (5) (joining partner) to be joined to the wheel hub (4),
- wherein the joining portion (6) of the wheel hub (4) is formed with a material ply (10) that is predetermined as a sacrificial ply with respect to a load-bearing structure (13) of the fiber-reinforced composite of the wheel hub (4);
- forming or milling a first surface profile (7.2) into the at least one joining portion (6) of the wheel hub (4), wherein the first surface profile (7.2) is formed or milled into the sacrificial ply (10) of the wheel hub (4);
- forming or milling a second surface profile (7.1) into the corresponding joining portion (6) of the carrier element (5), the second surface profile (7.1) being configurable in a form-fitting manner with respect to the first surface profile (7.2) at least in a circumferential direction of a wheel hub axis (R);
- joining the first and second surface profiles (7.1, 7.2) of the joining portions (6) of the wheel hub (4) and the carrier element (5) to or into one another in a form-fitting fashion in the direction of the wheel hub axis (R).

## Revendications

1. Système de roue de véhicule, lequel présente une roue (1) comportant un moyeu de roue (4) et au moins un élément de support (5) pour le montage de la roue (1) sur une pièce de véhicule et/ou pour l'agencement d'une unité de transmission de puissance, le moyeu de roue (4) présentant au moins une section d'assemblage (6) qui correspond à une section d'assemblage (6) de l'élément de support (5) dans l'état d'assemblage du systme de roue de véhicule, les profils de surface (7, 7.1, 7.2) des sections d'assemblage (6) étant conçus de telle sorte que dans l'état d'assemblage du système de roue de véhicule, le moyeu de roue (4) et l'élément de support (5) sont reliés l'un à l'autre par complémentarité de formes au moins dans la direction périphérique de l'axe de moyeu de roue (R), **caractérisé en ce que** le moyeu de roue (4) présente une structure de support (13) en matériau composite fibreux.

2. Système de roue de véhicule selon la revendication 1, **caractérisé en ce que** l'au moins une section d'assemblage (6) du moyeu de roue (4) est formée dans une ouverture de moyeu centrale du moyeu de roue (4).

3. Système de roue de véhicule selon l'une quelconque des revendications 1 à 2, **caractérisé en ce que** l'au moins une section d'assemblage (6) du moyeu de roue (4) est formée sur une bride de liaison du moyeu de roue (4) s'étendant dans la direction de l'axe de moyeu de roue (R).

4. Système de roue de véhicule selon l'une quelconque des revendications 1 à 3, **caractérisé en ce que** les profils de surface (7, 7.1, 7.2) des sections d'assemblage (6) du moyeu de roue (4) et de l'élément de support (5) sont étagés ou dentés ou ondulés au moins dans certaines régions dans la direction périphérique de l'axe de moyeu de roue (R).

5. Système de roue de véhicule selon l'une quelconque des revendications 1 à 4, **caractérisé en ce que** les profils de surface (7, 7.1, 7.2) de la section d'assemblage (6) du moyeu de roue (4) et de l'élément de support (5) sont conçus pour être coordonnés l'un par rapport à l'autre de telle sorte que le moyeu de roue (4) et l'élément de support (5) sont au moins partiellement reliés l'un à l'autre par ajustement serré.

6. Système de roue de véhicule selon l'une quelconque des revendications 1 à 5, **caractérisé en ce que** le profil de surface (7, 7.2) de la section d'assemblage (6) du moyeu de roue (4) et/ou le profil de surface (7, 7.1) de la section d'assemblage (6) de l'élément de support (5) sont conçus variables dans la direction de l'axe de moyeu de roue (R).

7. Système de roue de véhicule selon l'une quelconque des revendications 1 à 6, **caractérisé en ce que** la section d'assemblage du moyeu de roue (4) et/ou la section d'assemblage de l'élément de support (5) présentent au moins un élément de complémentarité de formes agissant axialement (14).

8. Système de roue de véhicule selon l'une quelconque des revendications 1 à 7, **caractérisé en ce que** le matériau de l'élément de support (5) présente une plus grande rigidité par rapport à la rigidité de la structure de support (13) du moyeu de roue (4) en matériau composite fibreux.

9. Système de roue de véhicule selon l'une quelconque des revendications 1 à 8, **caractérisé en ce que** le moyeu de roue (4), dans la zone de la section d'assemblage (6), présente une ou plusieurs couches de fibres comportant des fibres (11) disposées unidirectionnellement dans la direction périphérique de l'axe de moyeu de roue (R).

10. Système de roue de véhicule selon l'une quelconque des revendications 1 à 9, **caractérisé en ce que** le profil de surface (7, 7.2) de la section d'assemblage (6) du moyeu de roue (4) est formé par au moins une couche de matériau/couche sacrificielle (10) qui est exclue de la structure de support (13) du matériau composite fibreux du moyeu de roue (4).

11. Système de roue de véhicule selon l'une quelconque des revendications 1 à 10, **caractérisé en ce que** la structure de support (13) présente une ou plusieurs couches de matière plastique renforcée par des fibres de verre dans la zone de la section d'assemblage (6) du moyeu de roue (4).

12. Système de roue de véhicule selon l'une quelconque des revendications 1 à 11, **caractérisé en ce que** le moyeu de roue (4) et l'élément de support (5), dans la zone des sections d'assemblage (6), sont reliés au moyen d'un adhésif et/ou au moyen d'un matériau de matrice durcissable du matériau composite fibreux.

13. Système de roue de véhicule selon la revendication 11 ou 12, **caractérisé en ce que** l'adhésif ou le matériau de matrice présente un épaississement (15) sur un contour dans la transition entre les sections d'assemblage (6) reliées de l'élément de support (5) et du moyeu de roue (4).

14. Procédé de fabrication d'un système de roue de véhicule selon l'une quelconque des revendications 1 à 13 comprenant les étapes de procédé suivantes
- préfabrication d'un moyeu de roue (4) ou d'une roue de véhicule (1) en matériau composite fibreux comportant au moins une section d'assemblage (6) qui, dans l'état d'assemblage du système de véhicule, correspond à une section d'assemblage (6) d'au moins un élément de support (5) (partenaire d'assemblage) à assembler au moyeu de roue (4),
- la section d'assemblage (6) du moyeu de roue (4) étant formée avec une couche de matériau (10) qui est prédéfinie comme couche sacrificielle par rapport à la structure de support (13) du matériau composite fibreux du moyeu de roue (4).
- moulage ou fraisage d'un premier profil de surface (7.2) dans l'au moins une section d'assemblage (6) du moyeu de roue (4), le premier profil de surface (7.2) étant moulé ou fraisé dans la couche de matériau (10) du moyeu de roue (4) prédéfinie comme couche sacrificielle,
- moulage ou fraisage d'un second profil de surface (7.1) conçu complémentaire dans sa forme au premier profil de surface (7.2), au moins dans la direction périphérique de l'axe de moyeu de roue (R), dans la section d'assemblage (6) correspondante de l'élément de support (5),
- assemblage ou emboîtage par complémentarité de formes des profils de surface (7.1, 7.2) des sections d'assemblage (6) correspondantes du moyeu de roue (4) et de l'élément de support (5) dans la direction de l'axe de moyeu de roue (R).
